# EUROPEAN PATENT APPLICATION

(11) **EP 4 564 638 A1**
(43) Date of publication of application: **04.06.2025**
(21) Application number: 22959875.0
(22) Date of filing: 27.09.2022
(51) Int. Cl.: H02J 7/00

(54) **POWER DEVICE, POWER SUPPLY SYSTEM, AND VEHICLE**

(71) Applicant: Contemporary Amperex Intelligence Technology (Shanghai) Limited, Shanghai 200000 (CN)
(72) Inventor: WU, Kai, Shanghai 200120 (CN); ZHANG, Chuanhui, Shanghai 200120 (CN); LI, Bao, Shanghai 200120 (CN); FENG, Yang, Shanghai 200120 (CN)
(74) Representative: Ran, Handong
(86) International application number: PCT/CN2022/121911
(87) International publication number: WO 2024/065226

(57) **Abstract**

Provided in the embodiments of the present application are a power device, a power supply system, and a vehicle. The power device comprises a direct-current end and a first alternating-current end, wherein the direct-current end is connected to a first battery, and the first alternating-current end is connected to a first power interface. The power device is used for converting the battery voltage of the first battery into a first alternating-current voltage after a first signal is received, and supplying power to the first power interface by means of a first path between the direct-current end and the first alternating-current end.

## Description

### TECHNICAL FIELD

This application relates to the field of power supply, and more specifically, to a power device, a power supply system, and a vehicle.

### BACKGROUND

With the development of new energy technologies, batteries are increasingly used in various electrical apparatuses, such as mobile phones, laptops, electric bicycles, electric vehicles, electric airplanes, and electric ships.

Electric vehicles are used as an example. The battery in an electric vehicle outputs direct current, which can power the motor to enable the vehicle to drive, and the output direct current can also power other pre-configured electrical devices in the vehicle, such as lights and sound systems.

However, the aforementioned method of using the direct current output by the battery to power electrical devices is not sufficiently flexible. For example, the battery in electrical devices cannot output an alternating voltage and even cannot output a direct voltage for other non-pre-configured electrical devices.

### SUMMARY

This application provides a power device, a power supply system, and a vehicle, which can solve the technical problems of the power supply method of the battery being insufficiently flexible and the usage scenarios being inconvenient.

According to a first aspect, embodiments of this application provide a power device, including a direct current terminal and a first alternating current terminal; the direct current terminal being connected to a first battery, and the first alternating current terminal being connected to a first power interface.

The power device is configured to, convert a battery voltage of the first battery into a first alternating voltage upon receiving a first signal, and supply power to the first power interface through a first path between the direct current terminal and the first alternating current terminal.

In the technical solution of the embodiments of this application, through the arrangement that the direct current terminal of the power device can be connected to the first battery, and the first alternating current terminal can be connected to the first power interface, when the first power interface and the first battery are connected to the power device, the power device can convert the battery voltage of the first battery into the first alternating voltage through inversion upon receiving the power-up signal and output the first alternating voltage to the first power interface. When an alternating current load is connected to the first power interface, the first alternating voltage can supply power to the alternating current load. When the first battery is used to supply power to the load, the alternating current load does not need to be connected to a charging port of the first battery through a specific connection device. It only needs to be plugged into the first power interface in a usual way to be powered on for operation, which can reduce the complexity of the connection method used when the first battery supplies power to the alternating current load, thereby enhancing the flexibility and convenience of the battery supplying power to the load.

In some embodiments, the power device further includes a second alternating current terminal, where the second alternating current terminal is connected to a second power interface; when a charging device is connected to the second power interface, the power device allows the charging device to charge the first battery through a second path between the second alternating current terminal and the direct current terminal, and further allows the charging device to supply power to the first power interface through a third path between the second alternating current terminal and the first alternating current terminal. Through the provision of the second power interface, when the charging device is connected, the charging device can be used to supply power to the first power interface; and when the first load device is connected, the first battery can be used to supply power to the first load device.

In some embodiments, the power device further includes: a first switch connected to the second alternating current terminal; where when the charging device is connected to the second power interface, the power device controls the first switch to conduct the second path and the third path. Through the provision of the first switch, the conduction control of the second path and the third path can be realized. In addition, when no device is connected to the second power interface, the first switch can be controlled to disconnect, thereby enhancing circuit safety.

In some embodiments, the power device further includes a second alternating current terminal, the second alternating current terminal being connected to a second power interface; where when a first load device is connected to the second power interface, the power device converts the battery voltage of the first battery into the first alternating voltage, supplies power to the first power interface through the first path between the direct current terminal and the first alternating current terminal, and supplies power to the first load device through a second path between the direct current terminal and the second alternating current terminal. Through the first path and the second path, power can be supplied to the first power interface and the first load device separately, enhancing the flexibility of battery power supply.

In some embodiments, when the first load device is connected to the second power interface, the power device controls the first switch to conduct the second path. Through the arrangement that the first switch connects the direct current terminal to the second alternating current terminal, the first switch can further be controlled to conduct when the first load device is connected. When the first load device is connected to the second power interface, the first battery can output the first alternating voltage to the first load device through the conducted second path to supply power to the first load device.

In some embodiments, the power device is configured to determine that the first load device is connected to the second power interface upon receiving a connection confirmation signal and without receiving a charging guide signal; where the power device is further configured to determine that the charging device is connected to the second power interface upon receiving both the connection confirmation signal and the charging guide signal. Through the identification of the connection confirmation signal and the charging guide signal, it can be determined whether the first load device or the charging device is connected to the second power interface based on the received signal. If the first load device is connected to the second power interface, the second path can be conducted, and the first battery can be used to supply power to the first load device; and if the charging device is connected to the second power interface, the second path and the third path can be conducted, and the charging device can be used to supply power to the first power interface and charge the first battery.

In some embodiments, the power device includes: a power factor correction module, where an alternating current terminal of the power factor correction module is connected to the first power interface; and a direct current conversion module, where a first terminal of the direct current conversion module is connected to a direct current terminal of the power factor correction module, and a second terminal of the direct current conversion module is configured to connect to the first battery. Through the provision of the power factor correction module and the direct current conversion module, bidirectional rectification and inversion conversion can be achieved, thereby enabling charging and discharging of the first battery.

In some embodiments, the direct current conversion module is a bidirectional resonant direct current converter.

In some embodiments, the first signal is at least one of a power-up signal, a key insertion signal, and a first power interface power supply signal.

According to a second aspect, embodiments of this application provide a power supply system, including: a power device, where the power device is the power device described in the foregoing embodiments, a first battery, and a first power interface.

In some embodiments, the power supply system further includes: a DC/DC conversion module, including a high-voltage terminal and a low-voltage terminal, where the high-voltage terminal is connected to the first battery, and the low-voltage terminal is configured to connect to a third load device; where the DC/DC conversion module is configured to convert a battery voltage of the first battery into a second power supply voltage and output the second power supply voltage to the third load device. Through the provision of the DC/DC conversion module, the high-voltage of the first battery can further be converted to a low-voltage to supply power to a low-voltage load.

In some embodiments, the power supply system further includes: a second battery, connected to the low-voltage terminal of the DC/DC conversion module, a rated voltage of the second battery being lower than a rated voltage of the first battery; where the DC/DC conversion module is further configured to output the second power supply voltage to the second battery for charging; and the second battery is configured to output a battery voltage to supply power to the third load device. Through the provision of the second battery, the first battery can further be used to charge the second battery, or the second battery can be used to supply power to a low-voltage load.

In some embodiments, the power supply system further includes: an alternating current power distribution unit, where the alternating current power distribution unit is connected to the first power interface, and the alternating current power distribution unit is configured to control power-on of and/or provide circuit protection for a power supply circuit between a connected second load device and the first power interface. Through the provision of the alternating current power distribution unit, control of the connection and disconnection, and protection of the power supply circuit can be implemented, thereby enhancing the safety of the power supply system.

In some embodiments, an output terminal of the alternating current power distribution unit includes multiple power supply ports, and the second load device includes multiple alternating current load devices; where the alternating current power distribution unit is configured to connect to each alternating current load device through a respective power supply port and to independently control power-on of and/or provide circuit protection for a power supply circuit of each alternating current load device. Through the connection of each alternating current load device to a corresponding power supply port on the alternating current power distribution unit, the alternating current power distribution unit can output an appropriate alternating voltage to each alternating current load device separately to supply power. It can also control the power-on and provide circuit protection for each alternating current load device separately, allowing alternating current load devices to operate independently without interfering with one another, thereby enhancing the compatibility and safety of load power supply.

According to a third aspect, embodiments of this application provide a vehicle, where the vehicle includes the power supply system described in the foregoing embodiments.

In some embodiments, a power-up signal is a vehicle power-on key signal.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.
FIG. 1 is a schematic diagram of a module structure of a power device according to an embodiment of this application;
FIG. 2 is a schematic diagram of a module structure of a power device according to another embodiment of this application;
FIG. 3 is a schematic diagram of a module structure of a power device according to still another embodiment of this application;
FIG. 4 is a schematic diagram of a module structure of a power device according to yet another embodiment of this application;
FIG. 5 is a schematic diagram of a module structure of a power device according to still yet another embodiment of this application;
FIG. 6 is a schematic diagram of a module structure of a power device according to a further embodiment of this application;
FIG. 7 is a schematic diagram of a module structure of a power device according to still a further embodiment of this application;
FIG. 8 is a schematic diagram of a module structure of a power supply system according to an embodiment of this application;
FIG. 9 is a schematic diagram of a module structure of a power supply system according to another embodiment of this application;
FIG. 10 is a schematic diagram of a module structure of a power supply system according to still another embodiment of this application; and
FIG. 11 is a schematic diagram of a module structure of a power supply system according to yet another embodiment of this application.

In the accompanying drawings, the figures are not necessarily drawn to scale.

In the accompanying drawings:
10. power device; 11. first switch; 20. first battery; 21. second battery; 30. first power interface; 31. second power interface; 40. charging device; 50. first load device; 51. second load device; 52. third load device; PFC. power factor correction module; 60. direct current conversion module; 70. DC/DC conversion module; and PDU. alternating current power distribution unit.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the embodiments described are some rather than all embodiments of this application. All other embodiments obtained by a person of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "have", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to describe a particular order or a primary-secondary relationship.

Reference to "embodiment" in this application means that specific features, structures, or characteristics described with reference to the embodiment may be included in at least one embodiment of this application. The word "embodiment" appearing in various positions in the specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection; and a direct connection, an indirect connection via an intermediate medium, or an internal communication between two elements. Persons of ordinary skills in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between the contextually associated objects.

In the embodiments of this application, the same reference signs denote the same components. For brevity, in different embodiments, detailed descriptions of the same components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, "multiple" means more than two (inclusive).

At present, with the development of new energy technologies, batteries are increasingly being used in various electrical apparatuses, such as mobile phones, laptops, electric bicycles, electric vehicles, electric airplanes, and electric ships. With the continuous expansion of application fields of batteries, market demands for batteries are also increasing.

A traction battery may be used as a major traction source for an electrical apparatus (such as a vehicle, a ship, or a spacecraft), and an energy storage battery may be a charging source for the electrical apparatus. The importance of the traction battery and the energy storage battery is taken for granted. As examples instead of limitations, in some application scenarios, the traction battery may be a battery in an electrical apparatus, and the energy storage battery may be a battery in a charging apparatus. For ease of description, the traction battery and the energy storage battery may be collectively referred to as a battery below.

At present, batteries on the market are generally rechargeable storage batteries, most of which are lithium batteries, such as lithium-ion batteries or lithium-ion polymer batteries. When a battery is disposed in an electrical apparatus, the battery needs to be connected to a charging apparatus for charging if the remaining capacity of the battery is insufficient.

The battery can not only be connected to a charging apparatus to receive the voltage output by the charging apparatus for charging but can also discharge externally to supply power to various loads and motors.

The battery voltage provided by existing batteries is usually a direct voltage, and the direct voltage needs to be converted before it can supply power to an alternating load. Taking an electric vehicle as an example. At present, an electric vehicle typically supports discharge through the charging port. In other words, an alternating electrical load can be connected to the charging port through a connecting device. The electric vehicle can convert the battery voltage into an alternating voltage and output the alternating voltage to the electrical load for power supply after confirming the confirmation signal of the physical connection between the charging port and the connecting device.

However, in the foregoing battery discharge method, after the electrical load is connected to the charging port, it needs to communicate with the electric vehicle and can only receive the voltage output by the battery after the physical connection is confirmed through a handshake signal. Moreover, a plug of the electrical load cannot be directly connected to the charging port but needs to be connected to the charging port through the connecting device. Therefore, the method of powering the load with the battery is cumbersome and very inconvenient in daily use.

To solve the foregoing technical problems, embodiments of this application provide a power device, a power supply system, and a vehicle. The following first describes the power device provided in the embodiments of this application.

The power device disclosed in the embodiments of this application may be used without limitation in electrical apparatuses such as vehicles, ships, or aircrafts. For example, the power device may be a charger, where the charger may be an on-board charger provided in an electric vehicle, or it may be provided in other electrical apparatuses, capable of implementing charging of a battery by a charging apparatus. For example, the electrical apparatus may be but is not limited to a mobile phone, a tablet, a laptop computer, an electric toy, an electric tool, an electric bicycle, an electric vehicle, a ship, or a spacecraft.

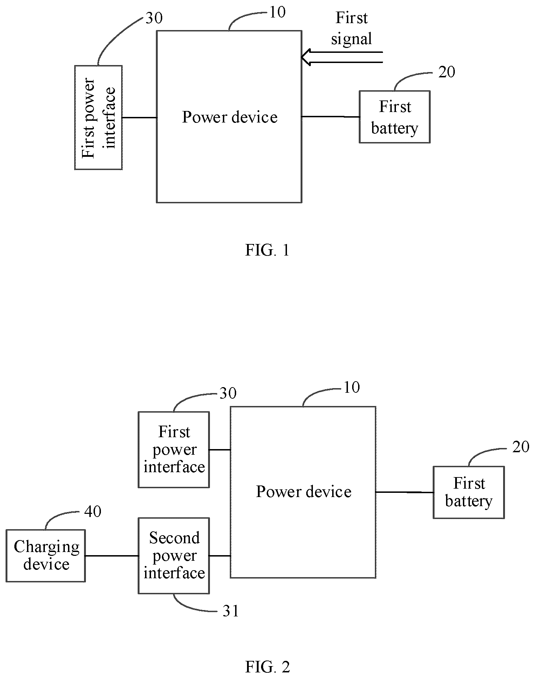

FIG. 1 is a schematic diagram of a module structure of a power device 10 according to an embodiment of this application. The power device 10 includes a direct current terminal and a first alternating current terminal.

The direct current terminal of the power device 10 can be connected to a first battery 20, and the first alternating current terminal can be connected to a first power interface 30.

When receiving a first signal, the power device 10 can receive a battery voltage of the first battery 20, convert the battery voltage into a first alternating voltage, and output the first alternating voltage to the first power interface 30 so that the first alternating voltage is output through a first path formed between the direct current terminal and the first alternating current terminal to supply power to the first power interface 30. The first power interface 30 may be a socket, a spiral interface, a connector, a power harness, and the like that can realize power connection. When a load is connected to the first power interface 30, the first power interface 30 can provide the first alternating voltage to the load for power supply.

The battery voltage of the first battery 20 is a direct voltage, and the first alternating voltage is an alternating voltage. The power device 10 can realize the conversion between a direct voltage and an alternating voltage.

When the power device 10 provides the first alternating voltage to the first power interface 30, a conventional alternating load can be connected to the first power interface 30 through a plug and operate under the first alternating voltage provided by the first power interface 30. In other words, the power device 10 can convert the direct voltage output by the first battery 20 into an alternating voltage and output the alternating voltage to the first power interface 30. When an alternating load is normally connected to the first power interface 30, power can be provided to the alternating load.

It should be understood that the first signal may be a control signal generated when both the first battery 20 and the first power interface 30 are connected to the power device 10, a control signal sent by a processing module connected to the power device 10, or a control signal sent by a user terminal or server through a communication connection. For example, the first signal may be at least one of a power-up signal, a key insertion signal, and a first power interface power supply signal. The power-up signal may be a signal generated when the power device 10 is powered on, and the key insertion signal may be a signal generated when the user starts the power device 10 or an electrical apparatus containing the power device 10 with a key. The first power interface power supply signal may be a signal generated when the first power interface 30 is connected to the power device 10. If the power device 10 does not receive the first signal, even if both the first battery 20 and the first power interface 30 are connected to the power device 10, the power device 10 will not output the first alternating voltage to the first power interface 30. At this time, an alternating load connected to the first power interface 30 will not be supplied with power, thereby improving the safety of load power supply.

In this embodiment, through the arrangement that the direct current terminal of the power device 10 can be connected to the first battery 20 and the first alternating current terminal of the power device 10 can be connected to the first power interface 30, when the first power interface 30 and the first battery 20 are connected to the power device 10, upon receiving the first signal, the power device 10 can convert the battery voltage of the first battery 20 into the first alternating voltage through inversion conversion and output the first alternating voltage to the first power interface 30 through the first path formed between the direct current terminal and the first alternating current terminal. When an alternating load is connected to the first power interface 30, the first alternating voltage can supply power to the alternating load. When the first battery 20 is used to supply power to the load, the alternating current load does not need to be connected to a charging port of the first battery 20 through a specific connection device. It only needs to be connected to the first power interface 30 in a usual way to receive the power supply voltage for operation, which can reduce the complexity of the connection method used when the first battery 20 supplies power to the alternating current load, thereby enhancing the convenience of the battery supplying power to the load.

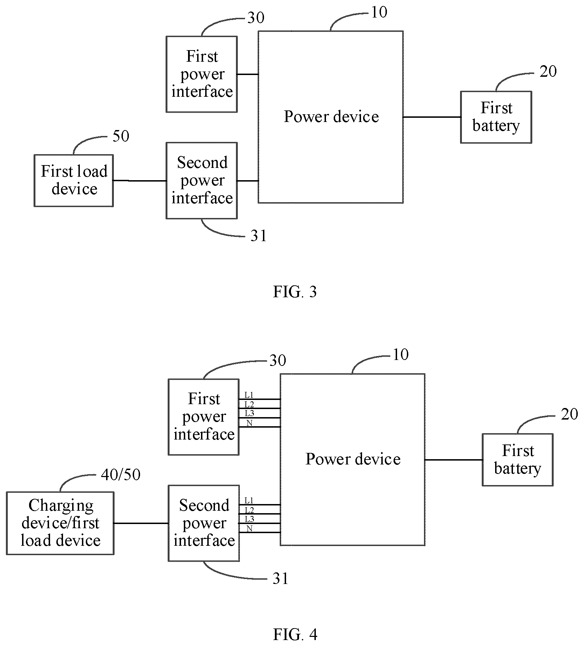

Referring to FIG. 2 and FIG. 3, according to some embodiments of this application, the foregoing power device 10 further includes a second alternating current terminal, where the second alternating current terminal can be connected to a second power interface 31.

When a charging device 40 is connected to the second power interface 31, as shown in FIG. 2, in this case, the power device 10 can receive an output voltage from the charging device 40, convert the output voltage into a charging voltage, and output the charging voltage to the first battery 20 through a second path between the second alternating current terminal and the direct current terminal to charge the first battery 20.

When the first alternating current terminal is connected to the first power interface 30, the power device 10 can also output the output voltage from the charging device 40 received by the second alternating current terminal to the first power interface 30 through a third path between the second alternating current terminal and the first alternating current terminal, that is, to connect the first alternating current terminal and the second alternating current terminal, so that the output voltage from the charging device 40 can also supply power to the first power interface 30.

The output voltage of the charging device 40 is an alternating voltage, and the charging voltage received by the first battery 20 is a direct voltage. The power device 10 can convert the alternating voltage output by the charging device 40 into the charging voltage received by the first battery 20 through rectification conversion to charge the first battery 20. Specifically, to achieve the charging of the first battery 20, the charging voltage should be higher than the battery voltage of the first battery 20.

In one specific embodiment, the foregoing power device 10 may be an on-board charger for an electric vehicle, where the on-board charger can realize bidirectional current conversion, that is, rectification conversion from the alternating current terminal to the direct current terminal and inversion conversion from the direct current terminal to the alternating current terminal. The first battery 20 may be a power battery of an electric vehicle and the power battery may be a high-voltage battery. The second power interface 31 may be a charging port of the electric vehicle, and the charging device 40 may be a charging pile or another charging apparatus. When the charging pile is connected to the charging port of the electric vehicle through a charging gun, the on-board charger can convert the voltage output by the charging pile into a charging voltage and output the charging voltage to the first battery 20 to charge the first battery 20.

It should be understood that when the power device 10 connects the first alternating current terminal to the second alternating current terminal, the output voltage of the charging device 40 can directly supply power to the first power interface 30. In other words, in this case, the output voltage of the charging device 40 is adapted to the electrical load connected to the first power interface 30. A working voltage of the electrical load is usually AC220V, AC110V, AC380V, and the like, and the output voltage of the charging device 40 should be within the working voltage range of the electrical load. That is, the second power interface 31 may be a slow charging socket. In one specific embodiment, the second power interface 31 may be a national standard slow charging socket.

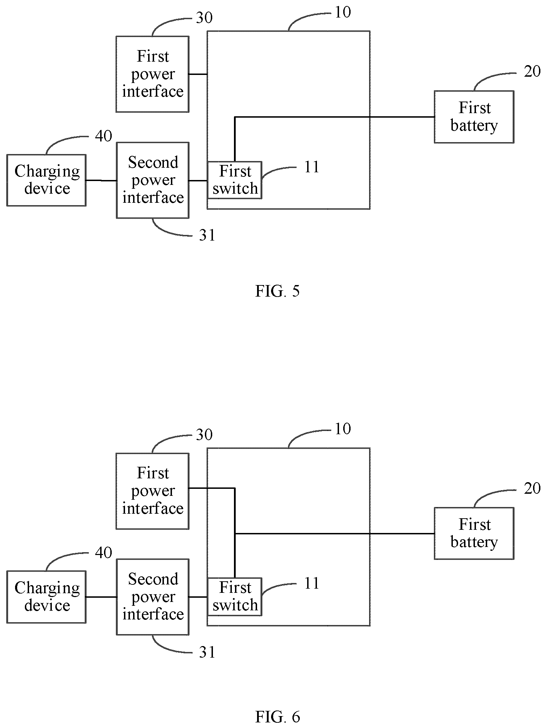

Referring to FIG. 5, according to some embodiments of this application, the foregoing power device 10 may further include a first switch 11. The first switch 11 is connected to the second alternating current terminal of the power device 10.

When the charging device 40 is connected to the second power interface 31, the power device 10 can control the first switch 11 to conduct the second path and the third path. The second path is a path formed between the second alternating current terminal and the direct current terminal, and the third path is a path formed between the second alternating current terminal and the first alternating current terminal.

When the second path is turned on, the voltage output by the charging device 40 can be converted by the power device 10 into the charging voltage of the first battery 20, and charge the first battery 20. When the charging device 40 is not connected to the second power interface 31, the first switch 11 can remain in an off state to improve the safety of the power supply circuit.

When the third path is conducted, the charging device 40 is connected to the first power interface 30. In this case, the output voltage of the charging device 40 can directly supply power to the first power interface 30. When an electrical load is connected to the first power interface 30, the output voltage of the charging device 40 can supply power to the electrical load.

According to some embodiments of this application, the power device 10 may further include a second alternating current terminal, where the second alternating current terminal can be connected to the second power interface 31.

When the first load device 50 is connected to the second power interface 31, as shown in FIG. 3, the power device 10 can receive the battery voltage of the first battery 20, convert the battery voltage into the first alternating voltage, and output the first alternating voltage to the first power interface 30 through the first path between the direct current terminal and the first alternating current terminal to supply power to the first power interface 30; and output the first alternating voltage to the second power interface 31 through the second path between the direct current terminal and the second alternating current terminal to supply power to the first load device 50 connected to the second power interface 31.

When the first load device 50 is connected to the second power interface 31, the power device 10 can rectify and convert the battery voltage of the first battery 20 to obtain the first alternating voltage and output the first alternating voltage through the first alternating current terminal and the second alternating current terminal. After the first power interface 30 receives the first alternating voltage, the electrical load can be connected to the first power interface 30 through a conventional plug, and the first alternating voltage can supply power to the electrical load after the electrical load is connected. After the second power interface 31 receives the first alternating voltage, the first alternating voltage can supply power to the first load device 50.

Referring to FIG. 6, according to some embodiments of this application, when the first load device 50 is connected to the second power interface 31, the power device 10 can control the first switch 11 to conduct the second path. The second path is a path formed between the second alternating current terminal and the direct current terminal.

When the second path is conducted, the battery voltage output by the first battery 20 can be converted into the first alternating voltage and output to the first load device 50 through the second path to supply power to the first load device 50. It should be understood that when the first load device 50 is not connected to the second power interface 31, the first switch 11 can remain in the off state to improve the safety of the power supply circuit.

It should be noted that, as shown in FIG. 4, the second power interface 31 can be connected to the charging device 40 or be connected to the first load device 50, in other words, the second power interface 31 can serve as a charging port or a discharging port. Taking an electric vehicle as an example, the second power interface 31 may be a charging port of the electric vehicle. When connected to the second power interface 31, the first load device 50 may be connected to the charging port through a corresponding connecting device. In other words, when the power device 10 uses the battery voltage of the first battery 20 to supply power to the first power interface 30 and the second power interface 31, the electrical load connected to the first power interface 30 can be connected in a manner of using a conventional plug, while the first load device 50 connected to the second power interface 31 cannot be connected in a conventional manner but needs to be connected to the second power interface 31 through a connecting device.

If the first load device 50 has a conventional plug, it can be connected to the second power interface 31 through a connecting device; and if the first load device 50 itself has an adapter plug device that can connect to the second power interface 31, the first load device 50 can also be directly connected to the second power interface 31.

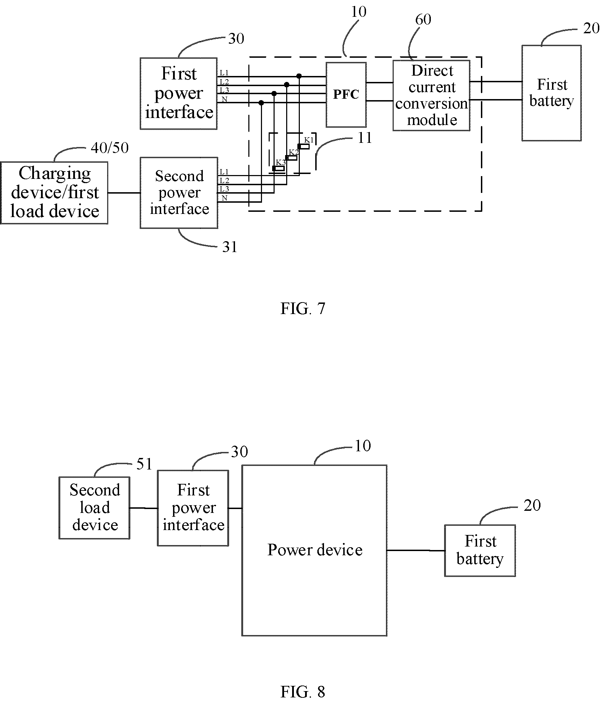

Referring to FIG. 7, according to some embodiments of this application, the first load device 50 may also be connected to the second power interface 31.

When the first load device 50 is connected to the second power interface 31, the power device 10 can control the first switch 11 to conduct. At this time, the power device 10 converts the battery voltage of the first battery 20 into the first alternating voltage and outputs the first alternating voltage to the first load device 50 through the conducted first switch 11, so as to supply power to the first load device 50.

In one specific embodiment, as shown in FIG. 7, the first alternating current terminal and the second alternating current terminal of the power device 10 may be three-phase alternating current terminals, and the first switch 11 may include K1 switch, K2 switch, and K3 switch. The K1 switch, K2 switch, and K3 switch may be relays.

According to some embodiments of this application, when the second power interface 31 is connected to the power device 10, the power device 10 needs to determine whether the device connected to the second power interface 31 is a charging device 40 or a first load device 50 to achieve switching between rectification conversion and inversion conversion.

When either the charging device 40 or the first load device 50 is connected to the second power interface 31, a corresponding indication signal will be generated. The power device 10 can determine whether the device connected to the second power interface 31 is a charging device 40 or a first load device 50 based on the indication signal.

When the first load device 50 is connected to the second power interface 31, if the physical connection between the first load device 50 and the second power interface 31 is completed, a connection confirmation signal will be generated at the connection position. The power device 10 can confirm that the physical connection is successful based on the connection confirmation signal.

It should be understood that, when the charging device 40 is connected to the second power interface 31, if the physical connection between the charging device 40 and the second power interface 31 is completed, a connection confirmation signal will also be generated at the connection position. In other words, when the power device 10 receives the connection confirmation signal, it can only confirm that the physical connection is successful but cannot determine whether the charging device 40 or the first load device 50 is connected.

When the charging device 40 is connected to the second power interface 31, after generating the connection confirmation signal, the charging device 40 can also receive the connection confirmation signal and send a charging guide signal to the power device 10. After the power device 10 receives the connection confirmation signal, if it then receives the charging guide signal, it can confirm that the connected device is the charging device 40. Conversely, if after the connection confirmation signal is received, no charging guide signal is received, it can be confirmed that the connected device is the first load device 50.

In one specific embodiment, the foregoing power device 10 may be an on-board charger for an electric vehicle, and the connection confirmation signal may be a CC signal generated when the charging device 40 is connected to the charging port through a charging gun, or a CC signal generated when the first load device 50 is connected to the charging port through a connecting device. When the power device 10 receives the CC signal, it can determine that the physical connection is successful. For example, for a physical connection between the power device 10 and the charging device 40 or the first load device 50 through a connecting device, if the physical connection is successful, the power device 10 can receive a specific voltage signal through a connection port; and if the physical connection is not successful, the connection port of the power device 10 is equivalent to being empty and cannot receive the specific voltage signal. The power device can determine whether the physical connection is successful based on whether the specific voltage signal is received. This specific voltage signal is the CC signal. After the charging device 40 is connected to the charging port through a charging gun, if it obtains the CC signal, it can also send a charging guide signal, where the charging guide signal may be a CP signal. For example, a corresponding control module may be arranged on the connecting device, where the control module may be, for example, an on-cable control box. When the power device 10 is connected to the charging device 40 or the first load device 50 through the connecting device, the control module on the connecting devices can also determine whether the physical connection is successful based on the foregoing CC signal. If the connection is successful, and the device connected to the power device 10 through the connecting device is the charging device 40, the control module on the connecting device can send a charging guide signal through the corresponding port, that is, the CP signal. If the power device 10 receives the CP signal, it indicates that the device connected through the connecting device is the charging device 40. Conversely, if the device connected to the power device 10 through the connecting device is the first load device 50, the control module on the connecting device will not send the corresponding charging guide signal, and at this time, the power device 10 can determine that the connected device is the first load device 50.

The CP signal may be a PWM signal. The charging device 40 can send the maximum charging current that the charging device 40 can support to the electric vehicle by adjusting the duty cycle of the CP signal.

Still referring to FIG. 7, according to some embodiments of this application, the power device 10 may include a power factor correction module PFC and a direct current conversion module 60.

When the first power interface 30 is connected to the power device 10, an alternating current terminal of the power factor correction module PFC can be connected to the first power interface 30. The first terminal of the direct current conversion module 60 is connected to the direct current terminal of the power factor correction module PFC. When the first battery 20 is connected to the power device 10, the second terminal of the direct current conversion module 60 can be connected to the first battery 20.

When the charging device 40 is connected to the second power interface 31, the power factor correction module PFC can perform rectification conversion on the output voltage of the charging device 40 to convert the alternating voltage into a direct voltage. The direct current conversion module 60 can boost or step down the direct voltage to generate a charging voltage higher than the battery voltage of the first battery 20, and output the charging voltage to the first battery 20, thereby implementing charging of the first battery 20.

When the first load device 50 is connected to the second power interface 31, or when the power device 10 supplies power to the first power interface 30, the direct current conversion module 60 can receive the battery voltage of the first battery 20, adjust the voltage of the battery voltage, and then perform inversion conversion through the power factor correction module PFC to generate an alternating voltage, that is, the first alternating voltage. The first alternating voltage can supply power to the first power interface 30 or the first load device 50 connected to the second power interface 31.

According to some embodiments of this application, the foregoing direct current conversion module 60 may be a bidirectional resonant direct current converter CLLLC.

Embodiments of this application further provide a power supply system. FIG. 8 is a schematic diagram of a module structure of a power supply system according to an embodiment of this application. The power supply system includes a power device 10, a first battery 20, and a first power interface 30.

The power device 10 is the power device 10 in the foregoing embodiments, the first battery 20 is connected to a direct current terminal of the power device 10, and the first power interface 30 is connected to a first alternating current terminal of the power device 10.

The power device 10 can convert a battery voltage of the first battery 20 into a first alternating voltage to supply power to the first power interface 30. When a second load device 51 is connected to the first power interface 30, the first alternating voltage can supply power to the second load device 51.

In this embodiment, through the arrangement that the power device 10 is connected to both the first battery 20 and the first power interface 30, the power device 10 can convert the battery voltage of the first battery 20 into the first alternating voltage through inversion conversion and output the first alternating voltage to the first power interface 30. When the second load device 51 is connected to the first power interface 30, the first alternating voltage can directly supply power to the second load device 51. When power supply is provided to the electrical load through the first battery 20, the electrical load does not need to connect to the first battery 20 through a charging port but can directly connect to the first power interface 30 to obtain the first alternating voltage. As an electrical load, the second load device 51 can be powered on for operation when the plug is connected to the first power interface 30, which is very simple and convenient and can improve the convenience of the battery supplying power to the load.

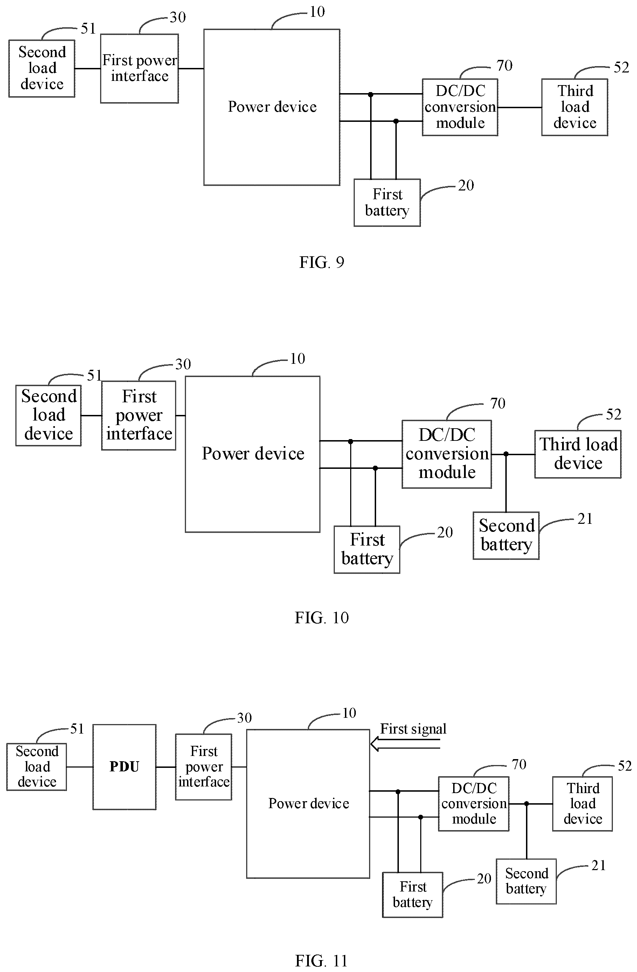

Referring to FIG. 9, according to some embodiments of this application, the power supply system may further include a DC/DC conversion module 70.

The DC/DC conversion module 70 may include a high-voltage terminal and a low-voltage terminal, where the high-voltage terminal can be connected to the first battery 20, and the low-voltage terminal can be connected to a third load device 52.

When the third load device 52 is connected to the power supply system, the DC/DC conversion module 70 can receive the battery voltage of the first battery 20 and convert the battery voltage into a second power supply voltage through direct current voltage regulation conversion. The second power supply voltage can be output to the third load device 52 to supply power to the third load device 52.

In one specific embodiment, the power supply system may be applied to an electric vehicle, where the first battery 20 is a traction battery of the electric vehicle. The battery voltage of the traction batteries of existing electric vehicles is usually about 400 V or 800 V, and the battery voltage needs to be stepped down to supply power to a direct current load to meet the working voltage range of the direct current load. The third load device 52 may be various low-voltage direct current loads in the electric vehicle, such as a low-voltage controller, a sound system, interior and exterior lights, a sunroof, and the like. The working voltage of the foregoing low-voltage direct current loads is usually 12 V or 24 V, so the DC/DC conversion module 70 can convert a higher voltage of the traction battery into a low-voltage direct current of about 12 V or 24 V to supply power to the corresponding third load device 52.

Referring to FIG. 10, according to some embodiments of this application, the power supply system may further include a second battery 21.

The second battery 21 can be connected to the low-voltage terminal of the DC/DC conversion module 70, and a rated voltage of the second battery 21 is lower than a rated voltage of the first battery 20.

The DC/DC conversion module 70 can achieve direct current voltage regulation between the high-voltage terminal and the low-voltage terminal. When the DC/DC conversion module 70 receives the battery voltage of the first battery 20 at the high-voltage terminal, it can step down the battery voltage of the first battery 20 to generate a second power supply voltage, and the second power supply voltage can further charge the second battery 21. Since the battery voltage of the first battery 20 needs to be stepped down to charge the second battery 21, the rated voltage of the first battery 20 should be higher than the rated voltage of the second battery 21. In one specific embodiment, the first battery 20 may be the traction battery of the electric vehicle, and the second battery 21 may be a storage battery or energy storage battery of the electric vehicle.

It should be understood that when the battery power of the second battery 21 meets a corresponding condition, if the third load device 52 is connected to the power supply system, the second battery 21 may also supply power to the third load device 52. In other words, when the DC/DC conversion module 70 is turned on, the first battery 20 can charge the second battery 21 and supply power to the third load device 52; and when the DC/DC conversion module 70 is turned off, the second battery 21 can supply power to the third load device 52.

Referring to FIG. 11, according to some embodiments of this application, the power supply system may further include an alternating current power distribution unit PDU.

The alternating current power distribution unit PDU may be connected to the first power interface 30. When the alternating current power distribution unit PDU is connected to the second load device 51, the alternating current power distribution unit PDU can control the power-on or provide circuit protection for the power supply circuit between the first power interface 30 and the second load device 51. Power-on control means that the alternating current power distribution unit PDU can control the conduction state of the circuit between the first power interface 30 and the second load device 51, for example, connecting the first power interface 30 to the second load device 51 or disconnecting the first power interface 30 from the second load device 51. Circuit protection means that the alternating current power distribution unit PDU can monitor the power of the circuit in real-time, for example monitoring power parameters such as power supply voltage, current, active power, reactive power, frequency, and the like. When overcurrent, overvoltage, overheating, or other abnormalities occur in the circuit, an alarm can be sent and the power supply circuit can be cut off in time.

According to some embodiments of this application, the output terminal of the alternating current power distribution unit PDU can include multiple power supply ports, and the second load device 51 can include multiple alternating current load devices.

The alternating current power distribution unit PDU can connect to each alternating current load device through a respective power supply port and independently control power-on of and provide circuit protection for the power supply circuit of each alternating current load device. In other words, when a single alternating current load device is connected to the corresponding power supply port of the alternating current power distribution unit PDU, the alternating current power distribution unit PDU can independently control the power supply and disconnection of the alternating current load device, and when a circuit abnormality occurs in the power supply circuit where the alternating current load device is located, it can independently cut off the power supply circuit without affecting the normal power supply of other alternating current load devices.

According to some embodiments of this application, this application further provides a vehicle, including the power supply system according to any of the foregoing embodiments, where the first power interface of the power supply system is located inside the vehicle, and the first power interface of the power supply system can serve as an internal socket of the vehicle. When an electrical load is connected to the internal socket, the power supply system can supply power to the electrical load.

When the power supply system is applied to a vehicle, a vehicle power-up module of the vehicle can also send a vehicle power-on key signal or start signal to the power device of the power supply system when a user triggers the start operation. When the power device receives the vehicle power-on key signal or start signal, it can determine that it has received the power-up signal and power on the first power interface.

It should be noted that in absence of conflicts, some embodiments and features in some embodiments in this application may be combined with each other.

In conclusion, it should be noted that the foregoing embodiments are merely intended for describing the technical solutions of this application, but not for limiting this application. Although this application is described in detail with reference to the foregoing embodiments, persons of ordinary skills in the art should understand that they may still make modifications to the technical solutions described in the foregoing embodiments or make equivalent replacements to some technical features thereof, without departing from the spirit and scope of the technical solutions of the embodiments of this application.

## Claims

1. A power device, comprising a direct current terminal and a first alternating current terminal,wherein
the direct current terminal is connected to a first battery, and the first alternating current terminal is connected to a first power interface;
the power device is configured to, convert a battery voltage of the first battery into a first alternating voltage upon receiving a first signal, and supply power to the first power interface through a first path between the direct current terminal and the first alternating current terminal.

2. The power device according to claim 1, wherein the power device further comprises a second alternating current terminal, and the second alternating current terminal is connected to a second power interface; and
when a charging device is connected to the second power interface, the power device allows the charging device to charge the first battery through a second path between the second alternating current terminal and the direct current terminal, and further allows the charging device to supply power to the first power interface through a third path between the second alternating current terminal and the first alternating current terminal.

3. The power device according to claim 2, wherein the power device further comprises a first switch, connected to the second alternating current terminal; and
when the charging device is connected to the second power interface, the power device controls the first switch to conduct the second path and the third path.

4. The power device according to claim 1, wherein the power device further comprises a second alternating current terminal, and the second alternating current terminal is connected to a second power interface; and
when a first load device is connected to the second power interface, the power device converts the battery voltage of the first battery into the first alternating voltage, supplies power to the first power interface through the first path between the direct current terminal and the first alternating current terminal, and supplies power to the first load device through a second path between the direct current terminal and the second alternating current terminal.

5. The power device according to claim 4, wherein when the first load device is connected to the second power interface, the power device controls the first switch to conduct the second path.

6. The power device according to any of claims 2 to 5, wherein the power device is configured to determine that the first load device is connected to the second power interface upon receiving a connection confirmation signal and without receiving a charging guide signal; and
the power device is further configured to determine that the charging device is connected to the second power interface upon receiving both the connection confirmation signal and the charging guide signal.

7. The power device according to claim 1, wherein the power device comprises:
a power factor correction module, wherein an alternating current terminal of the power factor correction module is connected to the first power interface; and
a direct current conversion module, wherein a first terminal of the direct current conversion module is connected to a direct current terminal of the power factor correction module, and a second terminal of the direct current conversion module is connected to the first battery.

8. The power device according to claim 7, wherein the direct current conversion module is a bidirectional resonant direct current converter.

9. The power device according to claim 1, wherein the first signal is at least one of a power-up signal, a key insertion signal, and a first power interface power supply signal.

10. A power supply system, wherein the power supply system comprises:
the power device according to any of claims 1 to 9, a first battery, and a first power interface.

11. The power supply system according to claim 10, wherein the power supply system further comprises:
a DC/DC conversion module, comprising a high-voltage terminal and a low-voltage terminal, wherein the high-voltage terminal is connected to the first battery, and the low-voltage terminal is configured to connect to a third load device; wherein
the DC/DC conversion module is configured to convert a battery voltage of the first battery into a second power supply voltage and output the second power supply voltage to the third load device.

12. The power supply system according to claim 11, wherein the power supply system further comprises:
a second battery, connected to the low-voltage terminal of the DC/DC conversion module, a rated voltage of the second battery being lower than a rated voltage of the first battery; wherein
the DC/DC conversion module is further configured to output the second power supply voltage to the second battery for charging; and
the second battery is configured to output a battery voltage to supply power to the third load device.

13. The power supply system according to claim 10, wherein the power supply system further comprises:
an alternating current power distribution unit, wherein the alternating current power distribution unit is connected to the first power interface, and the alternating current power distribution unit is configured to control power-on of and/or provide circuit protection for a power supply circuit between a connected second load device and the first power interface.

14. The power supply system according to claim 13, wherein an output terminal of the alternating current power distribution unit comprises multiple power supply ports, and the second load device comprises multiple alternating current load devices; and
the alternating current power distribution unit is configured to connect to each alternating current load device through a respective power supply port and to independently control power-on of and/or provide circuit protection for a power supply circuit of each alternating current load device.

15. A vehicle, wherein the vehicle comprises the power supply system according to any of claims 10 to 14.

16. The vehicle according to claim 15, wherein a power-up signal is a vehicle power-on key signal.
